(19) Europäisches Patentamt
European Patent Office
Office européen des brevets

(11) **EP 3 842 810 A1**

(12) **EUROPEAN PATENT APPLICATION**

(43) Date of publication:
**30.06.2021 Bulletin 2021/26**

(51) Int Cl.:
***G01N 35/00*** *(2006.01)* ***G01N 30/00*** *(2006.01)*

(21) Application number: **20211575.4**

(22) Date of filing: **03.12.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **26.12.2019 JP 2019236020**

(71) Applicant: **SHIMADZU CORPORATION**
**Kyoto-shi, Kyoto 604-8511 (JP)**

(72) Inventors:
• AOKI, Kengo
**Kyoto-shi,, Kyoto 604-8511 (JP)**
• KATO, Haruhisa
**Tsukuba-shi,, Ibaraki 305-0045 (JP)**

(74) Representative: **Müller-Boré & Partner**
**Patentanwälte PartG mbB**
**Friedenheimer Brücke 21**
**80639 München (DE)**

(54) **DATA PROCESSING METHOD AND DATA PROCESSING APPARATUS**

(57)    Data relating to a particle classified by a centrifugal field flow fractionation device in a preset analysis condition is processed by a data processing apparatus. Inputs of an arbitrary particle diameter and an arbitrary analysis condition are received (Step S101). An elution time of a particle having the particle diameter is calculated based on the input particle diameter and analysis condition (Step S102). The calculated elution time is displayed on a display unit (Step S103).

## FIG. 3

**Description**

**Technical Field**

The present invention relates to a data processing method and a data processing apparatus.

**Back Ground Art**

As a method of classifying particles contained in a liquid sample according to a size and specific gravity, a field flow fractionation (FFF) method is known. The FFF method is subdivided into various analytical methods, such as, e.g., an asymmetric flow fractionation method and a centrifugal field flow fractionation method (see, for example, Patent Documents 1 and 2 listed below).

A centrifugal field flow fractionation device, which is a device for classifying particles using a centrifugal field flow fractionation method, is provided with a circular rotor and an arc-shaped flow path member provided along the circumferential surface of the rotor. A circumferentially extending flow path is formed in the flow path member, and a liquid sample flows into the flow path. In such a centrifugal field flow fractionation device, by rotating the rotor, the flow path member attached to the rotor is rotated, so that a centrifugal force can be applied to the liquid sample in the flow path. As a result, particles contained in the liquid sample are classified and eluted at different timings depending on the size and the specific gravity.

**Prior Art Document**

**Patent Document**

Patent Document 1: European Patent Application Publication No. 2104853
Patent Document 2: Japanese Translation of PCT International Application Publication No. 2014-518761

**SUMMARY OF THE INVENTION**

**Problems to be Solved by the Invention**

An analysis condition of a centrifugal field flow fractionation device can be set to an optimum value depending on an elution time, which is a time until a particle in a liquid sample is eluted (the time until a peak of the particle appears). However, in a conventional analysis using a centrifugal field flow fractionation device, the elution time cannot be taught in advance to the user. Therefore, it was difficult to set the analysis condition to an optimum value.

For this reason, trial and error are required to set an optimum analysis condition, but one analysis time in a centrifugal field flow fractionation device is long. Therefore, it has conventionally been time-consuming to consider the analysis condition. Note that, in Patent Document 1 described above, a method of optimizing an analysis condition in an asymmetric flow fractionation method is disclosed, but it is difficult to apply such a method to a centrifugal field flow fractionation device.

It is an object of the present invention to provide a data processing method and a data processing apparatus capable of teaching a user an elution time in advance.

**Means for Solving the Problem**

The first aspect of the present invention is a data processing method for processing data relating to a particle to be classified by a centrifugal field flow fractionation device in a preset analysis condition. The method includes: a reception step of receiving an input of an arbitrary particle diameter and an input of an arbitrary analysis condition; a calculation step of calculating, based on the input particle diameter and the input analysis condition, an elution time of a particle having the input particle diameter; and a display step of displaying the calculated elution time.

The second aspect of the present invention is a data processing apparatus for processing data relating to a particle to be classified by a centrifugal field flow fractionation device in a preset analysis condition. The apparatus includes: a reception processing unit configured to receive an input of an arbitrary particle diameter and an input of an arbitrary analysis condition; a calculation unit configured to calculate, based on the input particle diameter and the input analysis condition, an elution time of a particle having the input particle diameter; and a display processing unit configured to perform processing of displaying the calculated elution time.

**Effects of the Invention**

According to the first aspect of the present invention, when a user inputs an arbitrary particle diameter and an arbitrary analysis condition, an elution time of a particle having the input particle diameter is calculated, and the calculated elution time is displayed. Thus, the elution time can be taught in advance to the user.

According to the second aspect of the present invention, in a case where an arbitrary particle diameter and an arbitrary analysis condition are input, an elution time of a particle having the input particle diameter is calculated, and the calculated elution time is displayed. Thus, the elution time can be taught in advance to the user.

**BRIEF DESCRIPTION OF THE DRAWINGS**

FIG. 1 is a schematic diagram showing a configuration example of an analysis system equipped with a centrifugal field flow fractionation device.

FIG. 2 is a schematic front view showing a configuration example of a centrifugal field flow fractionation device.

FIG. 3 is a block diagram for explaining a configuration of a data processing apparatus.

FIG. 4 is a diagram showing a display example of a display screen of a display unit.

FIG. 5 is a diagram showing a display example of a graph display region in the display screen.

FIG. 6 is a flowchart showing a first embodiment of a data processing method performed by a data processing apparatus.

FIG. 7 is a flowchart showing a first embodiment of a data processing method performed by a data processing apparatus.

FIG. 8 is a flowchart showing a second embodiment of a data processing method performed by a data processing apparatus.

**EMBODIMENTS FOR CARRYING OUT THE INVENTION**

**1. Configuration of Analysis System**

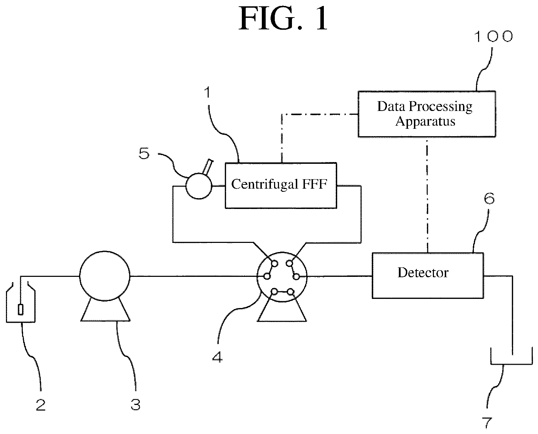

FIG. 1 is a schematic diagram showing a configuration example of an analysis system equipped with a centrifugal field flow fractionation device 1. The centrifugal field flow fractionation device 1 is a device for classifying particles contained in a liquid sample depending on the size and the specific gravity using a field flow fractionation (FFF) method. The analysis system of FIG. 1 is provided with, in addition to the centrifugal field flow fractionation device 1, a mobile phase reservoir 2, a liquid feed pump 3, a rotary valve 4, a sample injection device 5, a detector 6, a mobile phase collector 7, a data processing apparatus 100, and the like.

In the mobile phase reservoir 2, a mobile phase, such as, e.g., water and an organic solvent, is stored. The mobile phase is fed from the mobile phase reservoir 2 by the liquid feed pump 3 and is supplied to the centrifugal field flow fractionation device 1 via the rotary valve 4. The sample injection device 5 is provided between the rotary valve 4 and the centrifugal field flow fractionation device 1. The mobile phase into which a sample is injected from the sample injection device 5 is supplied as a liquid sample to the centrifugal field flow fractionation device 1.

The liquid sample includes a number of particles to be analyzed. The particles contained in the liquid sample are classified by being applied by a centrifugal force in the centrifugal field flow fractionation device 1. They are eluted from the centrifugal field flow fractionation device 1 at different timings depending on the size and the specific gravity. The particles eluted sequentially from the centrifugal field flow fractionation device 1 are sent to the detector 6 together with the mobile phase via the rotary valve 4, and are detected by the detector 6. Thereafter, the particles are collected by the mobile phase collector 7. Starting or stopping the supply of the liquid sample to the centrifugal field flow fractionation device 1 can be switched by rotating the rotary valve 4.

The data processing apparatus 100 is configured by, for example, a personal computer. The data processing apparatus 100 is electrically connected to the centrifugal field flow fractionation device 1, the detector 6, and the like. The data processing apparatus 100 can transmit data to and receive data from the centrifugal field flow fractionation device 1 and the detector 6 by wire or wirelessly.

**2. Configuration of Centrifugal Field Flow Fractionation Device**

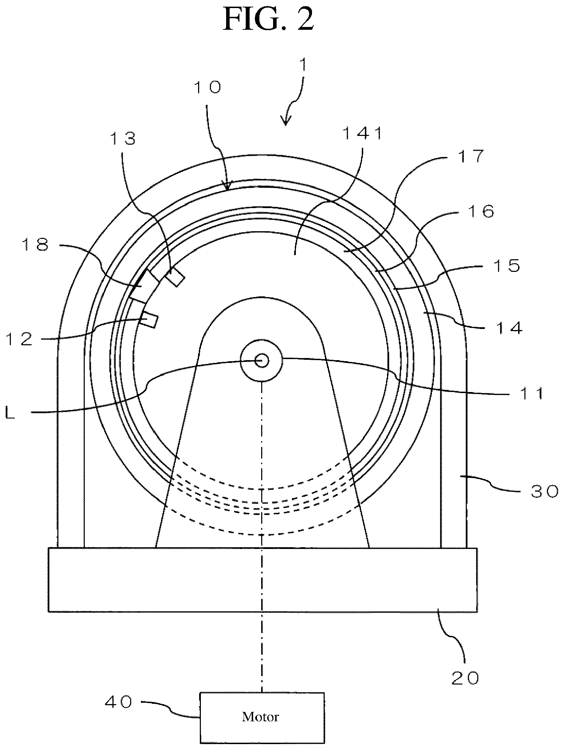

FIG. 2 is a schematic front view showing a configuration example of a centrifugal field flow fractionation device 1. The centrifugal field flow fractionation device 1 is configured by assembling a rotary portion 10 which rotates about a rotary shaft 11, a holding table 20 for rotatably holding the rotary shaft 11, and a protection wall 30 for preventing an operator from contacting the rotary portion 10 which is being rotated.

The rotary portion 10 is formed in, for example, a cylindrical shape and is held by the holding table 20 so that the rotary shaft 11 attached to the center portion of the rotary portion 10 extends horizontally. The protection wall 30 is, for example, a U-shaped member curved in a shape corresponding to the outer peripheral surface of the rotary portion 10. The protection wall 30 is attached to the holding table 20 in a state in which the protection wall 30 faces the outer peripheral surface of the rotary portion 10 with a small gap therebetween to cover the outer peripheral surface of the rotary portion 10.

The rotary shaft 11 is formed in a hollow shape. A liquid sample is supplied into the rotary shaft 11 from, for example, one end portion of the rotary shaft 11. The rotary portion 10 is provided with an inlet portion 12 through which the liquid sample before being classified is introduced, and an outlet portion 13 through which the liquid sample after being classified is output. The inlet portion 12 and the outlet portion 13 communicate with the inside of the rotary shaft 11 via respective pipes (not shown). With this, a liquid sample supplied to the rotary shaft 11 is introduced into the rotary portion 10 from the inlet portion 12 via piping. Then, particles in the sample liquid are classified in the rotary portion 10. After the classification, the liquid sample is guided from the outlet portion 13 to the rotary shaft 11 via piping and then sent to the detector 6.

The rotary shaft 11 is connected by a motor 40, which is an example of a rotary drive portion. By rotating the rotary portion 10 by the driving of the motor 40, a centrifugal force can be applied to the liquid sample in the rotary portion 10. Note that the rotary portion 10 may be rotated using a rotary drive unit other than the motor 40.

The rotary portion 10 is configured as a cylindrical member as a whole by assembling, for example, a rotor 14, a spacer 15, a flow path member 16, a fixing member 17, and a wedge-shaped member 18.

The rotor 14 is an annular member with one end face closed by an end wall 141. The end wall 141 is formed in a disc shape, and the rotary shaft 11 is inserted into the central portion of the end wall 141. The rotary shaft 11 is inserted in and fixed to the central portion of the end wall 141. Thus, the rotor 14 can be rotated about the rotary axis L coaxial with the rotary shaft 11 in accordance with the rotation of the rotary shaft 11.

In the inner inside (rotary axis L side) space of the rotor 14, the spacer 15, the flow path member 16, the fixing member 17, and the wedge-shaped member 18 are accommodated. The spacer 15, the flow path member 16, and the fixing member 17 are each formed in an elongated member curved in an arc shape and fixedly laminated in this order along the inner peripheral surface of the rotor 14. The radius of the spacer 15, the radius of the flow path member 16, and the radius of the fixing member 17 each are, for example, about 50 mm to about 200 mm.

The flow path member 16 is a thin plate member having a thickness of about 1 mm or less and is formed in a C-shape with both the end portions opposed in the circumferential direction with a gap therebetween. Inside the flow path member 16, a circumferentially extended flow path (not shown) is formed. The flow path in the flow path member 16 is set to have a height different depending on the type of a mobile phase, the condition of the analysis, and the like. Therefore, the flow path member 16 is formed to have a thickness depending on the height of the flow path. An optimum flow path member 16 is selected from among a plurality of types of flow path members 16.

The inlet portion 12 is communicated with one end portion of the flow path in the flow path member 16, while the outlet portion 13 is communicated with the other end portion of the outlet portion 13. As a result, the liquid sample flowed into the flow path of the flow path member 16 from the inlet portion 12 flows in the circumferential direction in the flow path from one end portion to the other end portion and exits from the outlet portion 13.

The fixing member 17 is a member having a thickness thicker than that of the flow path member 16 and is formed to have a thickness of, for example, about 10 mm. The fixing member 17, similarly to the flow path member 16, is formed in a C-shape with both the end portions opposed in the circumferential direction with a gap therebetween. The circumferential length of the fixing member 17 substantially coincides with the circumferential length of the flow path member 16. The fixing member 17 is provided along the inner peripheral surface of the flow path member 16 on the inside (rotary axis L side) of the flow path member 16, and the flow path member 16 is sandwiched between the fixing member 17 and the rotor 14. At this time, the wedge-shaped member 18 is attached between both end portions of the C-shaped fixing member 17 to apply a force in the direction of expanding the distance between both the end portions.

With this, the C-shaped fixing member 17 is strongly pressed against the inner peripheral surface side of the rotor 14, so that the flow path member 16 is pressed against the rotor 14 side and fixed thereto. When classifying the particles in the liquid sample, the rotor 14 is rotated at high speed, so that the inside of the flow path of the flow path member 16 becomes high pressure (e.g., about 1 MPa). As a result, the pressure difference between the inside of the flow path and the outside thereof increases. Even in such a case, since the flow path member 16 is sandwiched between the fixing member 17 and the rotor 14, it is possible to prevent the outer and inner peripheral surfaces of the flow path member 16 from being deformed toward the side (outer side) opposite to the flow path side due to the pressure difference.

In this embodiment, a spacer 15 is sandwiched between the flow path member 16 and the rotor 14. The material of the spacer 15 is not particularly limited but is formed of, for example, resin such as PET (Polyethylene Terephthalate) or metal. The spacer 15 is, for example, a thin plate having a thickness of 1 mm or less. The spacer 15 having a different thickness is selected according to the thickness of the flow path member 16. That is, the spacer 15 having an optimum thickness is selected so that the sum of the thickness of the spacer 15 and the thickness of the flow path member 16 is substantially constant. The spacer 15 also has a function of preventing damage to the inner peripheral surface of the rotor 14. However, the spacer 15 may be omitted.

### 3. Operation During Classification

When classifying the particles in the liquid sample, first, the rotary portion 10 is rotated by driving the motor 40 while feeding a mobile phase to the flow path in the flow path member 16, and the rotation speed of the rotary portion 10 is gradually increased. When the rotation speed of the rotary portion 10 has reached a predetermined value (initial rotation speed No), a sample is injected into the mobile phase from the sample injection device 5 while maintaining the rotation speed. Thereafter, when a predetermined time (injection time $t_{inj}$) has elapsed in a state in which the rotation speed of the rotary portion 10 is maintained at the initial rotation speed No, the liquid feeding of the mobile phase is stopped.

After the stop of feeding the mobile phase, the rotation speed of the rotary portion 10 is maintained at the initial rotation speed No for a predetermined time (relaxation time $t_{relax}$). Thereby, the particles in the liquid sample are centrifugally settled in the flow path of the flow path member 16. Then, at the timing when the relaxation time trelax has elapsed, the feeding of the mobile phase is resumed. This timing is the timing for starting the analysis.

Even after the feeding of the mobile phase is resumed, the rotation speed of the rotary portion 10 is maintained at the initial rotation speed No until a specified time (attenuation start time $t_1$) has elapsed. Then, at the timing when the attenuation start time $t_1$ has elapsed, the rotation speed of the rotary portion 10 is gradually decreased (attenuated). With this, particles are flowed out of the inside of the flow path member 16 in the order from the smaller size and specific gravity in the liquid sample and are sent to the detector 6. Thereafter, at a predetermined time (attenuation time $t_{tot}$) has elapsed from the start of decreasing the rotation of the rotary portion 10, the rotation of the rotary portion 10 is stopped and the analysis is completed.

### 4. Configuring Data Processing Apparatus

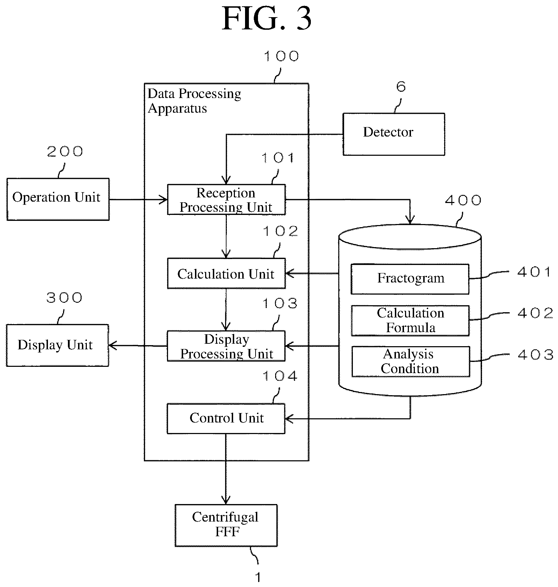

FIG. 3 is a diagram for explaining the configuration of the data processing apparatus 100. The data processing apparatus 100 is provided with a processor, such as, e.g., a CPU (Central Processing Unit). The data processing apparatus 100 functions as a reception processing unit 101, a calculation unit 102, a display processing unit 103, a control unit 104, and the like, by executing programs by a processor.

In addition to the centrifugal field flow fractionation device 1 and the detector 6 as described above, an operation unit 200, a display unit 300, a storage unit 400, and the like are electrically connected to the data processing apparatus 100. The operation unit 200 includes, for example, a keyboard or a mouse and is operated by a user. The display unit 300 includes, for example, a liquid crystal display, and is provided with a display screen for displaying various kinds of information. The storage unit 400 includes, for example, a hard disk, a RAM (Random Access Memory) or a ROM (Read Only Memory) and can store various types of data.

When the user operates the operation unit 200, the reception processing unit 101 performs processing for receiving an input accompanied by the operation. In other words, the data processing apparatus 100 performs data processing according to the information in which the input is received by the reception processing unit 101. However, the reception processing unit 101 may receive not only an input accompanied by the operation of the operating operation unit 200 but also information input by wire or wirelessly from other external devices.

In this embodiment, the detection signal input from the detector 6 is received by the reception processing unit 101. The data in which the detection signal (density) from the detector 6 and the time (elution time) are associated is stored in the storage unit 400 as a fractogram 401

The information in which the input is received by the reception processing unit 101 is exemplified by the information of particles (particle information) to be analyzed, and a condition for the analysis (analysis condition) in the centrifugal field flow fractionation device 1. The user can input arbitrary particle information and an arbitrary analysis condition by operating the operation unit 200. The input information is received by the reception processing unit 101.

The particle information includes, for example, the outer diameter (particle diameter d) of the particle in the liquid sample, and the density (particle density $\rho_p$) of the particle in the liquid sample. In some cases, the information on the particle diameter d and the particle density $\rho_p$ of the particle in the liquid sample may be known to some extent by a user. By operating the operation unit 200, the user can input the particle information, such as, e.g., the particle diameter d and the particle density $\rho_p$, which are recognized in advance. However, the particle information is not limited to a parameter, such as, e.g., the particle diameter d and the particle density $\rho_p$, but may include other parameters relating to the particle.

The analysis condition includes, for example, information on the control for the centrifugal field flow fractionation device 1 (control information), information on the structure or the operation of a device, such as, e.g., a centrifugal field flow fractionation device 1 (device information), and information on the mobile phase to be used (mobile phase information), and the like. The centrifugal field flow fractionation device 1 classifies the particles in the liquid sample by operating in a preset analysis condition. The data processing apparatus 100 processes the data relating to the particles to be classified by the centrifugal field flow fractionation device 1.

The control information includes, in addition to the initial rotation speed $N_0$, the attenuation start time $t_1$, the relaxation time $t_{relax}$, the injection time $t_{inj}$, and the attenuation time $t_{tot}$, an attenuation variable $t_a$, a multiplier p, and the like. The attenuation variable $t_a$ takes a negative value. However, the smaller the absolute value, the more easily the rotation speed of the rotary portion 10 is attenuated. The higher the multiplier p, the more easily the rotation speed of the rotary portion 10 is attenuated. The user can arbitrarily set the control information, and the rotation speed N of the rotary portion 10 after the t seconds from the start of the analysis is expressed by the following formulas (1) and (2).

$$0 \leqq t \leqq t_1: N = N_0 \qquad \cdots (1)$$

$$t > t_1: N = N_0 \left[\frac{t_1 - t_a}{t - t_a}\right]^p \qquad \cdots (2)$$

The conditions that are routinely changed among the control information as described above are, for example, the initial rotation speed $N_0$, the attenuation variable $t_a$, and the attenuation time $t_{tot}$. The maximum holding force acting on the particles in the liquid sample at the time of the classification is the holding force according to the initial rotation speed $N_0$. For example, when the initial rotation speed $N_0$ is too low, the holding force acting on the particles may be inadequate, and small particles may elute with void peaks (described below) without being classified. On the other hand, when the initial rotation speed $N_0$ is too high, it takes a longer time to attenuate the rotation speed of the rotary portion 10, so that the analysis time becomes longer. Further, when the attenuation variable $t_a$ is small, the rotation speed of the rotary portion 10 is attenuated in a short time. Therefore, it is possible to shorten the attenuation time $t_{tot}$. On the other hand, when the attenuation variable $t_a$ is large, it takes a longer time to attenuate the rotation speed of the rotary portion 10. Therefore, the attenuation time $t_{tot}$ becomes longer.

The device information includes the information of the shape of the flow path in the flow path member 16. As the information of the shape of the flow path, for example, the radius r of the arc-shaped flow path with respect to the rotary axis L, and the height w of the flow path and the like can be exemplified. The device information may include the angular velocity co of the flow path at the time of rotating the rotary portion 10. Further, the device information may include the capacity (pipe capacity V) of the piping through which the mobile phase flows. Further, the device information may include a void time to. The void is detected as a peak (void peak) independent of the particles contained in the liquid sample. The time from the start of the analysis (at the time of resuming the liquid supply) until the void is detected is a void time to. The void time to can also be calculated by the formula to = V/Q, based on the pipe capacity V and the flow rate Q of the mobile phase. At least a part of the device information may be input from the centrifugal field flow fractionation device 1.

The mobile phase information includes the density of the mobile phase (mobile phase density $\rho_s$), etc., in the liquid sample. Based on the particle density $\rho_p$ and the mobile phase density $\rho_s$, the absolute value of the difference can be calculated as a difference density $\Delta\rho$. However, the analysis condition is not limited to the parameters as described above and may include other parameters relating to the analysis.

The calculation unit 102 performs arithmetic processing based on the information in which the input is received by the reception processing unit 101. Specifically, the elution time $t_r$ is calculated by the following Formula (3). "$\lambda_0$" in Formula (3) is calculated by the following Formula (4). "G" in Formula (4) is the initial gravitational field and is calculated by the following Formula (5). In Formula (4), k is the Boltzmann constant, and T is the temperature (e.g., room temperature). T may be input by operating the operation unit 200 by the user, or the detection signal from the temperature sensor may be received by the reception processing unit 101.

$$t_r = (t_1 - t_a)\left[(p + 1)\frac{t_0 - 6t_1\lambda_0}{6(t_1 - t_a)\lambda_0}\right]^{\frac{1}{p+1}} + t_a \qquad \cdots (3)$$

$$\lambda_0 = \frac{6kT}{\pi d^3 G w \Delta\rho} \qquad \cdots (4)$$

$$G = \frac{r\omega^2}{g} = \frac{r}{g}\left(\frac{2\pi}{60}N_0\right)^2 \qquad \cdots \quad (5)$$

The above Formula (3) can be calculated based on Formula (2). The calculation method of Formula (3) based on Formula (2) is well known as described in "FIELD-FLOW FRACTIONATION HANDBOOK" (Martin E. Schimpf, et al., Wiley-Interscience Inc., published on July 7, 2000, p. 145-165), etc., and therefore the detail description will be omitted. However, the calculation method of Formula (3) is not limited to this method.

As described above, in this embodiment, the input of information, such as, e.g., the particle diameter and the analysis condition, is received by the reception processing unit 101. Based on the information, the elution time of the particle having the particle diameter is calculated by the calculation unit 102. The information may include not only the particle diameter d but also the particle density $\rho_p$ as the particle information. The analysis condition may include at least one of control information, such as, e.g., the initial rotation speed $N_0$, the attenuation start time $t_1$, the attenuation variable $t_a$, and the multiplier p. The analysis condition may include at least one of device information, such as, e.g., the void time $t_0$, the radius r of the flow path, the height w of the flow path, the angular velocity co of the flow path, and the like. The above-described analysis condition may include the mobile phase information, such as, e.g., the mobile phase density $\rho_s$.

The various kinds of computational formulas 402 as exemplified by the above-described Formulas (1) to (5) are stored in the storage unit 400. The various kinds of analysis conditions 403 in which the inputs were received by the reception processing unit 101 are stored in the storage unit 400, and the control at the time of the analysis is performed based on the analysis condition 403.

When an input of an arbitrary attenuation start time $t_1$ is received by the reception processing unit 101 in accordance with the operation of the operation unit 200 by the user, the calculation unit 102 can also calculate the analysis condition based on the attenuation start time $t_1$. As the attenuation start time $t_1$, for example, a value equal to or longer than the void time $t_0$ is input. For example, the input attenuation start time $t_1$ and the elution time $t_r$ satisfying the condition of tr $\geqq$ A$\times$ $t_1$ are substituted into the above-described Formula (3), and the initial rotation speed $N_0$ is calculated using Formulas (4) and (5). Further, the attenuation time $t_{tot}$ is calculated based on the formula of $t_{tot} = t_r - t_1 + B$. Note that A and B are predetermined coefficients. For example, A is set to a value of 2 or more, and B is set to a value of 5 to 20. With this, the peak in the elution time of each particle appearing in the fractogram can be sufficiently separated from void peaks, and the initial rotation speed $N_0$ and the attenuation time $t_{tot}$ that the attenuation continues until the elution of the particle is completed is calculated as the analysis condition.

Note that it is not limited to the configuration in which the attenuation time $t_{tot}$ is calculated based on the input of the attenuation start time $t_1$, and may be, for example, the configuration in which the attenuation start time $t_1$ and the attenuation time $t_{tot}$ are calculated based on the input of the elution time $t_r$, or the configuration in which the attenuation start time $t_1$ and the attenuation time $t_{tot}$ are calculated based on the input of the analysis time ($t_1 + t_{tot}$). In this case, the input of the elution time $t_r$ or the input of the analysis time ($t_1 + t_{tot}$) will be received at the reception processing unit 101. Note that the attenuation variable $t_a$ can also be obtained by the formula of $t_a = -pt_1$.

The display processing unit 103 performs processing of displaying the data calculated by the calculation unit 102 on the display unit 300. The data displayed at this time includes the elution time $t_r$, the initial rotation speed $N_0$, the attenuation time $t_{tot}$, etc., as examples of the data calculated by the calculation unit 102. Not that only a part of these data may be displayed on the display unit 300, or other data calculated by the calculation unit 102 may be displayed on the display unit 300.

Further, the display processing unit 103 performs processing of displaying the data stored in the storage unit 400 on the display unit 300. The data displayed at this time includes, for example, a fractogram 401 as an example of the data stored in the storage unit 400. The fractogram 401 is the data of the actual elution time of the particle classified by the centrifugal field flow fractionation device 1 in a particular analysis condition. Such an actual elution time may be displayed on the display unit 300 in association with the elution time $t_r$ calculated by the calculation unit 102. Note that other data stored in the storage unit 400 may be displayed on the display unit 300.

The control unit 104 controls the operation of the centrifugal field flow fractionation device 1 based on the analysis condition 403 stored in the storage unit 400. Among analysis conditions, in particular, the operation of the centrifugal field flow fractionation device 1 is controlled based on the above-described control information.

### 5. Display Examples For Display Unit

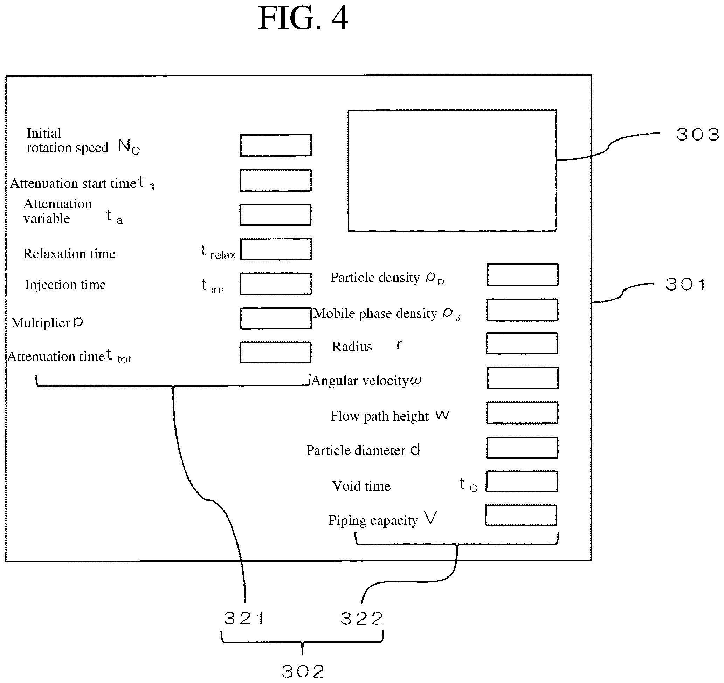

FIG. 4 is a diagram showing a display example of a display screen 301 of the display unit 300. The display screen 301 includes a setting screen 302 and a graph display region 303. The setting screen 302 includes a first setting region 321 and a second setting region 322.

The first setting region 321 is a display region for setting, for example, control information. The control information to be set in the first setting region 321 includes, for example, an initial rotation speed $N_0$, an attenuation start time $t_1$, an attenuation variable $t_a$, a relaxation time $t_{relax}$, an injection time $t_{inj}$, a multiplier p, an attenuation time $t_{tot}$, and the like.

The second setting region 322 is a display region for setting, for example, particle information, mobile phase information, and device information. The particle data to be set in the second setting region 322 includes, for example, a particle density $\rho_p$ and a particle diameter d. The mobile phase information to be set in the second setting region 322 includes, for example, a mobile phase density $\rho_s$, and the like. The device information to be set in the setting region 322 includes, for example, a radius r of a flow path, an angular velocity $\omega$ of a flow path, a height w of a flow path, a void time $t_0$, a piping capacity V, etc.

Note that the information that can be set in the first setting region 321 and the second setting region 322 is not limited to the above-described information. Further note that the combination of the settable information in the first setting region 321 and the second setting region 322 is optional, and the first setting region 321 and the second setting region 322 may not be separated. In other words, each of the information setting regions may be arranged in an arbitrary region in the display screen 301.

In the graph display region 303, the elution time calculated based on the information (e.g., particle diameter d, etc.) input in the setting screen 302 is graphically displayed as an expected fractogram. In addition, in this embodiment, the fractogram 401 representing the actual elution time of the particle classified by the centrifugal field flow fractionation device 1 in a particular analysis condition is read from the storage unit 400 and displayed graphically in the graph display region 303. Thus, the fractogram 401 representing the actual elution time is displayed in a superimposed manner on the same time-axis in association with the elution time calculated by the calculation unit 102.

As described above, the display processing unit 103 causes the same display screen 301 to display the setting screen 302 for receiving inputs of various information, such as, e.g., the particle diameter d, and the elution time (fractogram) calculated based on the information, such as, e.g., the particle diameter d, input by the setting screen 302. Note that the present invention is not limited to the configuration in which the elution time is displayed graphically, and the elution time may be displayed in other forms, such as, e.g., a table. In cases where the elution time is displayed, the display of the detection signal (density) from the detector 6 may be omitted. Also note that the region (graph display region 303) for displaying the elution time may be displayed on another display screen together with a part of the setting screen 302 (for example, the first setting region 321 or the second setting region 322). It may be configured such that the setting screen 302 is displayed for each particle diameter d and that the elution time corresponding to each particle diameter d is displayed in the same region (graph display region 303).

### 6. Display Examples for Graph Display Region

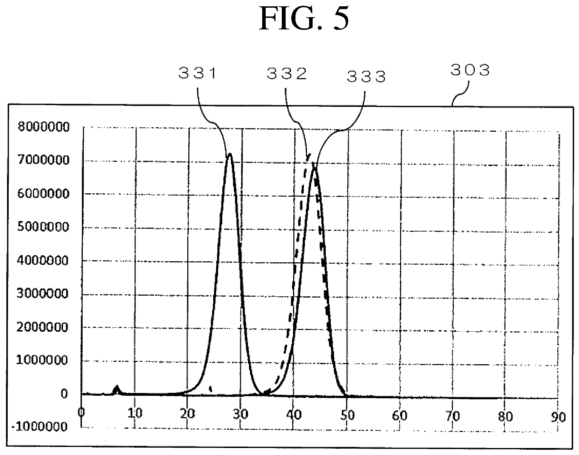

FIG. 5 is a diagram showing a display example for the graph display region 303 in the display screen 301. In this example, three fractograms 331, 332, and 333 are displayed in an overlapped manner on the same graph display region 303. In the graph display region 303, the horizontal axis represents the time (elution time), and the vertical axis represents the detection signal (density) from the detector 6.

The fractogram 331 represents the actual elution time of a particle classified by the centrifugal field flow fractionation device 1 with the initial rotation speed $N_0$ = 4,500 rpm and the attenuation variable $t_a$ = 40 min. Based on this data, when the initial rotation speed is changed to $N_0$ = 11,250 rpm in the setting screen 302, the expected elution time is displayed as the fractogram 332. The actual elution time of the particle classified by the centrifugal field flow fractionation device 1 is displayed as a fractogram 333 with the initial rotation speed $N_0$ = 11,250 rpm and the attenuation variable $t_a$ = 40 min.

As can be understood, the fractogram 332 representing the expected elution time has a peak at a position that generally coincides with the position of the peak of the fractogram 333 representing the actual elution time. The user can confirm the degree of coincidence between the expected fractogram 332 and the actual fractogram 333 based on the display of the graph display region 303 in the display screen 301.

### 7. First Embodiment of Data Processing Method

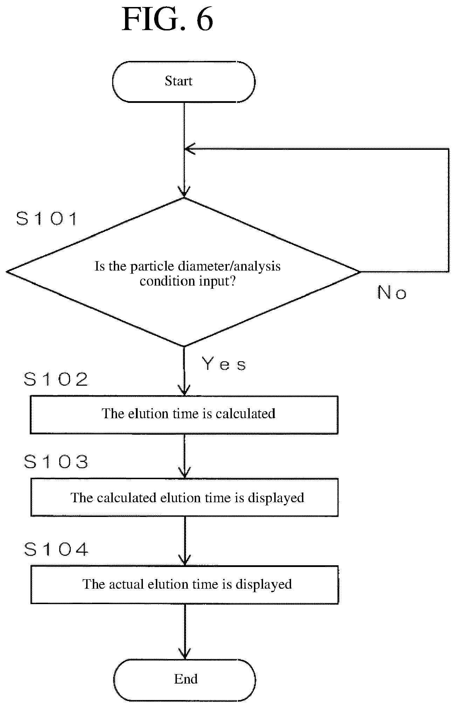

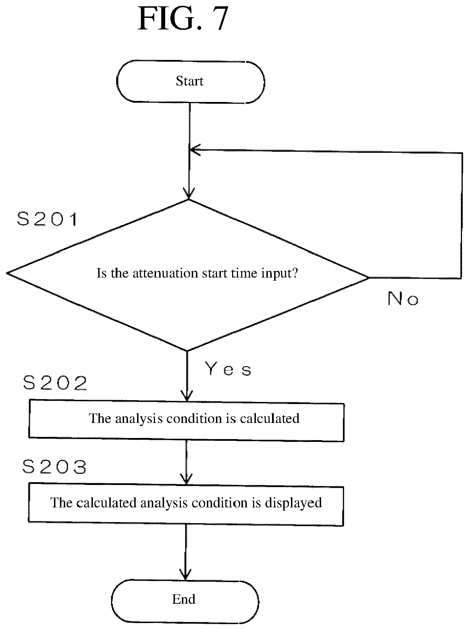

FIG. 6 and FIG. 7 are flowcharts showing a first embodiment of the data processing method performed by the data processing apparatus 100.

As shown in FIG. 6, when the reception processing unit 101 receives an input of information, such as, e.g., an arbitrary particle diameter and an arbitrary analysis condition (Yes: in Step S101: Reception Step), the calculation unit 102 calculates the elution time of the particle having the particle diameter based on the information (Step S102: Calculation Step).

The calculated elution time is displayed on the display unit 300 by the display processing unit 103 (Step S103: Display Step). At this time, the calculated elution time is displayed on the graph display region 303 of the display screen 301 as a fractogram. The graph display region 303 in which the calculated elution time is displayed as a fractogram is displayed on the same display screen 301 as the setting screen 302 for receiving an input of the analysis condition.

When the data of the actual elution time is obtained, the display processing unit 103 displays the actual elution time data on the display unit 300 (Step S104: Display Step). At this time, the actual elution time is displayed on the graph display region 303 of the display screen 301 as a fractogram associated with the elution time calculated by the calculation unit 102. Note that only the calculated elution time may be displayed without displaying the data of the actual elution time.

As shown in FIG. 7, when the reception processing unit 101 receives an input of an arbitrary attenuation start time (Yes in Step S201: Reception Step), the calculation unit 102 calculates the analysis condition based on the attenuation start time (Step S202: Calculation Step). The calculated analysis condition is displayed on the display unit 300 by the display processing unit 103 (Step S203: Display Step).

As the analysis condition displayed at this time, as described above, the initial rotation speed $N_0$ and the attenuation time $t_{tot}$ are exemplified in which the peak in the elution time of each particle appearing in the fractogram can be sufficiently separated from a void peak. These analysis conditions are displayed on the display unit 300 as recommended parameters when the user sets analysis conditions.

## 8. Second Embodiment of Data Processing Method

In this embodiment, the calculation unit 102 calculates the particle diameter distribution data from the actual elution time $t_r$ using the fractogram 401 obtained based on the detection signal from the detector 6. This actual elution time $t_r$ is an elution time of each particle classified by the centrifugal field flow fractionation device 1 in a specific analysis condition. The particle diameter distribution data is the data in which the particle diameter of each particle in the liquid sample and the detection intensity (density) of each particle are associated.

Specifically, the analysis condition at the time of the classification and the actual elution time $t_r$ of each particle are substituted into the following Formula (6) obtained from the above-described Formulas (3) and (4). Thus, the particle diameter of each particle is calculated. Then, the detected strength of each particle obtained from the fractogram 401 is associated with the calculated particle diameter of each particle, so that the particle diameter distribution data is calculated.

$$d = \sqrt[3]{\frac{6kT}{\pi G w \Delta \rho} \left[ \frac{6(t_1 - t_a)}{t_0(p+1)} \left\{ \left( \frac{t_r - t_a}{t_1 - t_a} \right)^{p+1} - 1 \right\} + \frac{6t_1}{t_0} \right]} \quad \cdots (6)$$

The calculation unit 102 can calculate the elution time $t_r$ of each particle when the analysis condition is changed, based on the particle diameter distribution data calculated as described above. Specifically, an input of an arbitrary particle diameter in particle diameter distribution data is received by the reception processing unit 101. In a case where an input of a changed analysis condition (for example, the initial rotation speed $N_0$ or the attenuation variable $t_a$) is received by the reception processing unit 101, the elution time $t_r$ of the particle having the particle diameter is calculated by the calculation unit 102 using the above-described Formulas (3), (4), and (5). The calculated elution time $t_r$ is displayed on the display unit 300 as the expected fractogram.

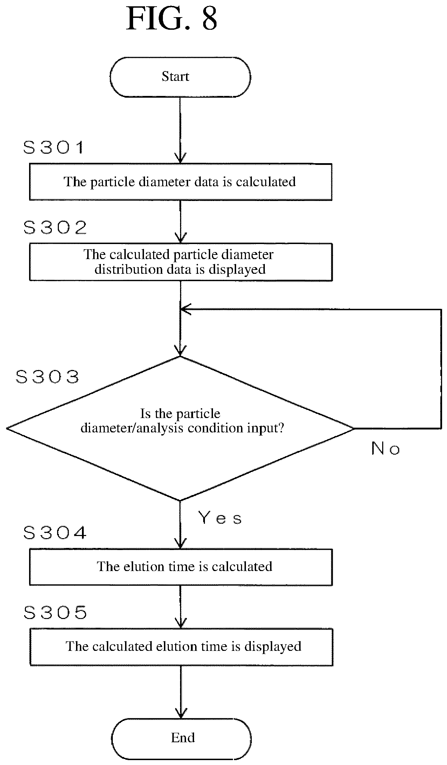

FIG. 8 is a flowchart showing a second embodiment of the data processing method performed by the data processing apparatus 100. In this embodiment, as shown in FIG. 8, the calculation unit 102 calculates the particle diameter distribution data, based on the actual elution time of the particle classified by the centrifugal field flow fractionation device 1 in a particular analysis condition (Step S301: Calculation Step).

The calculated particle diameter distribution data is displayed on the display unit 300 by the display processing unit 103 (Step S302: Display Step). The user confirms the particle diameter distribution data displayed on the display unit 300, selects (inputs) a desired particle diameter from the particle diameter distribution data, and changes various analysis conditions in the setting screen 302 displayed on the display screen 301.

When an input of an arbitrary particle diameter in a particle diameter distribution data and an input of an arbitrary analysis condition are received (Yes in Step S303: Reception Step), the calculation unit 102 calculates the elution time of the particle having the particle diameter, based on the information (Step S304: Calculation Step).

The calculated elution time is displayed on the display unit 300 by the display processing unit 103 (Step S305: Display Step). At this time, the calculated elution time is displayed on the graph display region 303 of the display screen 301 as a fractogram. The graph display region 303 in which the calculated elution time is displayed as a fractogram, is displayed on the same display screen 301 as the setting screen 302 for receiving the input of the analysis condition.

## 6. Modified Embodiments

In the above embodiment, the centrifugal field flow fractionation device 1 as exemplified in FIG. 2 has been described. However, the configuration of the centrifugal field flow fractionation device 1 is not limited to the configuration shown in FIG. 2, and may be another configuration in which particles can be classified by a centrifugal force. The configuration of the analysis system including the centrifugal field flow fractionation device 1 is not limited to the configuration illustrated in FIG. 1.

The calculation formula 402 used when the calculation unit 102 performs the calculation is not limited to the above-described Formulas (1) to (6), and other formulas may be used.

## 7. (Mode)

It should be understood by those skilled in the art that the plurality of exemplary embodiments described above are illustrative of the following aspects.

(Item 1) A data processing method according to one aspect of the present invention is a data processing method for processing data relating to a particle to be classified by a centrifugal field flow fractionation device in a preset analysis condition. The method may include:

a reception step of receiving an input of an arbitrary particle diameter and an input of an arbitrary analysis condition;
a calculation step of calculating, based on the input particle diameter and the input analysis condition, an elution time of a particle having the input particle diameter; and
a display step of displaying the calculated elution time.

According to the data processing method described in the first aspect, by inputting an arbitrary particle diameter and an arbitrary analysis condition by a user, the elution time of the particle having the input particle diameter is calculated, and the calculated elution time is displayed. Thus, the elution time can be taught in advance to the user.

**(Item 2)** In the data processing method as recited in the above-described Item 1, in the display step, a setting screen for receiving the input of the arbitrary particle diameter and the elution time calculated based on the particle diameter input by the setting screen may be displayed on the same display screen.

According to the data processing method as recited in Item 2, when a particle diameter is input in the setting screen, the elution time calculated based on the particle diameter can be easily confirmed by the same display screen as the setting screen.

**(Item 3)** In the data processing method as recited in the above-described Item 1 or 2, in the display step, an actual elution time of the particle classified by the centrifugal field flow fractionation device in a particular analysis condition may be displayed in association with the elution time calculated in the calculation step.

According to the data processing method described in Item 3, since the actual elution time is displayed in association with the elution time expected from the particle diameter and the analysis condition, it is possible to confirm the degree of coincidence between the expected elution time and the actual elution time.

**(Item 4)** In the data processing method as recited in any one of the above-described Items 1 to 3, in the reception step, an input of an arbitrary attenuation start time may be receivable. In the calculation step, an analysis condition may be calculated based on the input attenuation start time. In the display step, the calculated analysis condition may be displayed.

According to the data processing method described in Item 4, the analysis condition is calculated based on the attenuation start time of the centrifugal field flow fractionation device, and the analysis condition can be displayed as a recommended parameter when setting the analysis condition by the user.

**(Item 5)** The data processing method as recited in any one of the above-described Items 1 to 3, in the reception step, an input of an arbitrary elution time may be receivable. In the calculation step, an analysis condition may be calculated based on the input elution time. In the display step, the calculated analysis condition may be displayed.

According to the data processing method described in Item 5, the analysis condition is calculated based on the elution time of the centrifugal field flow fractionation device, and the analysis condition can be displayed as a recommended parameter when setting the analysis condition by the user.

**(Item 6)** The data processing method as recited in one of the above-described Items 1 to 3, in the reception step, an input of an arbitrary analysis time may be receivable. In the calculation step, an analysis condition may be calculated based on the input analysis time. In the display step, the calculated analysis condition may be displayed.

According to the data processing method of Item 6, the analysis condition is calculated based on the analysis time of the centrifugal field flow fractionation device, and the analysis condition can be displayed as a recommended parameter when setting the analysis condition by the user.

**(Item 7)** The data processing method as recited in any one of the above-described Items 1 to 6, in the calculation step, based on an actual elution time of the particle classified by the centrifugal field flow fractionation device in a particular analysis condition, particle diameter distribution data may be calculated. In a case in which the arbitrary particle diameter in the particle diameter distribution data and the arbitrary analysis condition are input, the elution time of the particle having the particle diameter may be calculated.

According to the data processing method described in Item 7, using the particle diameter distribution data calculated based on the actual elution time, it is possible to calculate the elution time of the particle diameter distribution data having the particle diameter by inputting an arbitrary particle diameter in the particle diameter distribution data.

**(Item 8)** A data processing apparatus according to one aspect of the present invention is a data processing apparatus for processing data relating to a particle to be classified by a centrifugal field flow fractionation device in a preset analysis condition. The apparatus may include:

a reception processing unit configured to receive an input of an arbitrary particle diameter and an input of an arbitrary analysis condition;

a calculation unit configured to calculate, based on the input particle diameter and the input analysis condition, an elution time of a particle having the input particle diameter; and

a display processing unit configured to perform processing of displaying the calculated elution time.

According to the data processing apparatus described in Item 8, when the arbitrary particle diameter and the arbitrary analysis condition are input, the elution time of the particle having the input particle diameter is calculated, and the calculated elution time is displayed. Thus, the elution time can be taught in advance to the user.

**(Item 9)** In the data processing apparatus as recited in the above-described Item 8, the display processing unit may cause a setting screen for receiving the input of the arbitrary particle diameter and an elution time calculated based on the particle diameter input by the setting screen to display on the same display screen.

According to the data processing apparatus described in Item 9, when the particle diameter is input in the setting screen, the elution time calculated based on the particle diameter can be easily confirmed by the same display screen as the setting screen.

**(Item 10)** In the data processing apparatus as recited in the above-described Item 8 or 9, the display processing unit may cause an actual elution time of the particle classified by the centrifugal field flow fractionation device in a particular analysis condition to display in association with the elution time calculated by the calculation unit.

According to the data processing apparatus described in Item 10, since the actual elution time is displayed in association with the elution time expected from the particle diameter and the analysis condition, it is possible to confirm the degree of coincidence between the expected elution time and the actual elution time.

**(Item 11)** In the data processing apparatus as recited in any one of the above-described Items 8 to 10, the reception processing unit may be capable of performing processing of receiving an input of an arbitrary attenuation start time. The calculation unit may calculate an analysis condition based on the input attenuation start time. The display processing unit may perform processing of displaying the calculated analysis condition.

According to the data processing apparatus of Item 11, the analysis condition is calculated based on the attenuation start time of the centrifugal field flow fractionation device, and the analysis condition can be displayed as a recommended parameter when setting the analysis condition by the user.

**(Item 12)** The data processing apparatus as recited in any one of the above-described Items 8 to 10, the reception processing unit may be capable of performing processing of receiving an input of an arbitrary elution time. The calculation unit may calculate an analysis condition based on the input elution time. The display processing unit may perform processing of displaying the calculated analysis condition.

According to the data processing apparatus described in Item 12, the analysis condition is calculated based on the elution time of the centrifugal field flow fractionation device, and the analysis condition can be displayed as a recommended parameter when setting the analysis condition by the user.

**(Item 13)** In the data processing apparatus as recited in any one of the above-described Items 8 to 10, the reception processing unit may be capable of performing processing of receiving an input of an arbitrary analysis time. The calculation unit may calculate an analysis condition based on the input analysis time. The display processing unit may perform processing of displaying the calculated analysis condition.

According to the data processing apparatus described in Item 13, the analysis condition is calculated based on the analysis time of the centrifugal field flow fractionation device, and the analysis condition can be displayed as a recommended parameter when setting the analysis condition by the user.

**(Item 14)** In the data processing apparatus as recited in any one of the above-described Items 8 to 13, the calculation unit may calculate particle diameter distribution data based on an actual elution time of the particle classified by the centrifugal field flow fractionation device in a particular analysis condition. In a case in which the arbitrary particle diameter in the particle diameter distribution data and the arbitrary analysis condition are input, the calculation unit may calculate the elution time of the particle having the particle diameter.

According to the data processing apparatus described in Item 14, using the particle diameter distribution data calculated based on the actual elution time, it is possible to calculate the elution time of the particle diameter distribution data having the particle diameter by inputting the arbitrary particle diameter in the particle diameter distribution data.

**Claims**

1. A data processing method for processing data relating to a particle to be classified by a centrifugal field flow fractionation device in a preset analysis condition, the method comprising:

   a reception step of receiving an input of an arbitrary particle diameter and an input of an arbitrary analysis condition;
   a calculation step of calculating, based on the input particle diameter and the input analysis condition, an elution time of a particle having the input particle diameter; and
   a display step of displaying the calculated elution time.

2. The data processing method as recited in claim 1,
   wherein in the display step, a setting screen for receiving the input of the arbitrary particle diameter and the elution time calculated based on the particle diameter input by the setting screen are displayed on the same display screen.

3. The data processing method as recited in claim 1 or 2,
   wherein in the display step, an actual elution time of the particle classified by the centrifugal field flow fractionation device in a particular analysis condition is displayed in association with the elution time calculated in the calculation step.

4. The data processing method as recited in any of claims 1 to 3,
   wherein in the reception step, an input of an arbitrary attenuation start time is receivable,
   wherein in the calculation step, an analysis condition is calculated based on the input attenuation start time, and
   wherein in the display step, the calculated analysis condition is displayed.

5. The data processing method as recited in any of claims 1 to 4,
   wherein in the reception step, an input of an arbitrary elution time is receivable,
   wherein in the calculation step, an analysis condition is calculated based on the input elution time, and
   wherein in the display step, the calculated analysis condition is displayed.

6. The data processing method as recited in any of claims 1 to 5,
   wherein in the reception step, an input of an arbitrary analysis time is receivable,
   wherein in the calculation step, an analysis condition is calculated based on the input analysis time, and
   wherein in the display step, the calculated analysis condition is displayed.

7. The data processing method as recited in any of claims 1 to 6,
   wherein in the calculation step,
   based on an actual elution time of the particle classified by the centrifugal field flow fractionation device in a particular analysis condition, particle diameter distribution data is calculated, and
   in a case in which the arbitrary particle diameter in the particle diameter distribution data and the arbitrary analysis condition are input, the elution time of the particle having the particle diameter is calculated.

8. A data processing apparatus for processing data relating to a particle to be classified by a centrifugal field flow fractionation device in a preset analysis condition, the apparatus comprising:

   a reception processing unit configured to receive an input of an arbitrary particle diameter and an input of an arbitrary analysis condition;
   a calculation unit configured to calculate, based on the input particle diameter and the input analysis condition, an elution time of a particle having the input particle diameter; and
   a display processing unit configured to perform processing of displaying the calculated elution time.

9. The data processing apparatus as recited in claim 8,
   wherein the display processing unit causes a setting screen for receiving the input of the arbitrary particle diameter and an elution time calculated based on the particle diameter input by the setting screen to display on the same display screen.

10. The data processing apparatus as recited in claim 8 or 9,
    wherein the display processing unit causes an actual elution time of the particle classified by the centrifugal field flow fractionation device in a particular analysis condition to display in association with the elution time calculated by the calculation unit.

11. The data processing apparatus as recited in any of claims 8 to 10,
    wherein the reception processing unit is capable of performing processing of receiving an input of an arbitrary attenuation start time,
    wherein the calculation unit calculates an analysis condition based on the input attenuation start time, and
    wherein the display processing unit performs processing of displaying the calculated analysis condition.

12. The data processing apparatus as recited in any of claims 8 to 11,
    wherein the reception processing unit is capable of performing processing of receiving an input of an arbitrary elution time,
    wherein the calculation unit calculates an analysis condition based on the input elution time, and
    wherein the display processing unit performs processing of displaying the calculated analysis condition.

13. The data processing apparatus as recited in any of claims 8 to 12,
    wherein the reception processing unit is capable of performing processing of receiving an input of an arbitrary analysis time,
    wherein the calculation unit calculates an analysis condition based on the input analysis time, and
    wherein the display processing unit performs processing of displaying the calculated analysis condition.

14. The data processing apparatus as recited in any of claims 8 to 13,
    wherein the calculation unit calculates particle diameter distribution data based on an actual elution time of the particle classified by the centrifugal field flow fractionation device in a particular analysis condition; and
    wherein in a case in which the arbitrary particle diameter in the particle diameter distribution data and the arbitrary analysis condition are input, the calculation unit calculates the elution time of the particle having the particle diameter.

# FIG. 1

# FIG. 2

# FIG. 3

# FIG. 4

Initial
rotation speed $N_0$

Attenuation start time $t_1$

Attenuation
variable $t_a$

Relaxation time $t_{relax}$

Injection time $t_{inj}$

Multiplier $p$

Attenuation time $t_{tot}$

Particle density $\rho_p$

Mobile phase density $\rho_s$

Radius $r$

Angular velocity $\omega$

Flow path height $W$

Particle diameter $d$

Void time $t_0$

Piping capacity $V$

303

301

321    322

302

# FIG. 5

# FIG. 6

```
                    ┌─────────────┐
                    │    Start     │
                    └─────────────┘
                           │
                           ▼
  S101              ◇ Is the particle diameter/analysis
                      condition input?              No
                           │ Yes
  S102                     ▼
            ┌──────────────────────────────┐
            │  The elution time is calculated │
            └──────────────────────────────┘
                           │
  S103                     ▼
            ┌──────────────────────────────┐
            │ The calculated elution time is displayed │
            └──────────────────────────────┘
                           │
  S104                     ▼
            ┌──────────────────────────────┐
            │  The actual elution time is displayed │
            └──────────────────────────────┘
                           │
                           ▼
                    ┌─────────────┐
                    │     End      │
                    └─────────────┘
```

# FIG. 7

```
                    ┌─────────────┐
                    │    Start    │
                    └─────────────┘
                           │
                           ▼
                          ╱ ╲
        S201            ╱     ╲
                      ╱         ╲
                    ╱  Is the     ╲
                   ╱ attenuation    ╲ ── No
                    ╲ start time    ╱
                      ╲  input?   ╱
                        ╲       ╱
                          ╲   ╱
                           │ Yes
        S202               ▼
                ┌─────────────────────────┐
                │ The analysis condition  │
                │     is calculated       │
                └─────────────────────────┘
                           │
        S203               ▼
                ┌─────────────────────────────┐
                │ The calculated analysis     │
                │ condition is displayed      │
                └─────────────────────────────┘
                           │
                           ▼
                    ┌─────────────┐
                    │     End     │
                    └─────────────┘
```

20

# FIG. 8

Start

S301

The particle diameter data is calculated

S302

The calculated particle diameter
distribution data is displayed

S303

Is the particle
diameter/analysis condition input?

No

Yes

S304

The elution time is calculated

S305

The calculated elution time is displayed

End

Europäisches
Patentamt

European
Patent Office

Office européen
des brevets

# EUROPEAN SEARCH REPORT

Application Number

EP 20 21 1575

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LEVIN SHULAMIT ET AL: "Simulation of fractograms of fat emulsions in power-programmed sedimentation field-flow fractionation (SdFFF)", JOURNAL OF PHARMACEUTICAL AND BIOMEDICAL ANALYSIS, vol. 13, no. 7, June 1995 (1995-06), pages 869-877, XP055784625, AMSTERDAM, NL ISSN: 0731-7085, DOI: 10.1016/0731-7085(95)01313-A | 1,3-8, 10-14 | INV. G01N35/00 G01N30/00 |
| Y | * the whole document * | 2,9 | |
| Y | US 5 156 039 A (GIDDINGS JOHN C [US]) 20 October 1992 (1992-10-20) * abstract * * column 5, line 58 - column 6, line 2 * * figures 3-4 * | 2,9 | |
| X,D | EP 2 104 853 A1 (WYATT TECHNOLOGY EUROP GMBH [DE]) 30 September 2009 (2009-09-30) * paragraphs [0015] - [0019] * * paragraphs [0052] - [0055] * * figures 4, 5a-d * | 8 | TECHNICAL FIELDS SEARCHED (IPC) G01N |

The present search report has been drawn up for all claims

| Place of search | Date of completion of the search | Examiner |
|---|---|---|
| Munich | 11 March 2021 | Bravin, Michel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 842 810 A1**

## ANNEX TO THE EUROPEAN SEARCH REPORT
## ON EUROPEAN PATENT APPLICATION NO.

EP 20 21 1575

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2021

| Patent document cited in search report | | Publication date | Patent family member(s) | | Publication date |
|---|---|---|---|---|---|
| US 5156039 | A | 20-10-1992 | NONE | | |
| EP 2104853 | A1 | 30-09-2009 | AT | 468532 T | 15-06-2010 |
| | | | DE 102007047695 A1 | | 09-04-2009 |
| | | | EP | 2104853 A1 | 30-09-2009 |
| | | | JP | 5066612 B2 | 07-11-2012 |
| | | | JP | 2011501690 A | 13-01-2011 |
| | | | WO | 2009046887 A1 | 16-04-2009 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2104853 A

- JP 2014518761 PCT

**Non-patent literature cited in the description**

- **MARTIN E. SCHIMPF et al.** FIELD-FLOW FRAC-TIONATION HANDBOOK. Wiley-Interscience Inc, 07 July 2000, 145-165